# EUROPÄISCHE PATENTSCHRIFT

(11) **EP 2 736 802 B1**
(45) Veröffentlichungstag und Bekanntmachung des Hinweises auf die Patenterteilung: **09.09.2015**
(21) Anmeldenummer: 12753057.4
(22) Anmeldetag: 26.07.2012
(51) Int. Cl.: B64C 1/14, B29C 51/14, G02F 1/00, G02F 1/13, B64D 11/00

(54) **VERFAHREN ZUM HERSTELLEN EINES LUFTFAHRZEUGFENSTERS MIT EINER LICHTTRANSMISSIONSBEEINFLUSSUNGSVORRICHTUNG**
METHOD FOR PRODUCING AN AIRCRAFT WINDOW WITH A LIGHT TRANSMISSION CONTROL DEVICE
PROCÉDÉ DE FABRICATION D'UN HUBLOT D'AÉRONEF AVEC UN DISPOSITIF INFLUENÇANT LA TRANSMISSION DE LUMIÈRE

(30) Priorität: 28.07.2011 DE 102011108736
(43) Veröffentlichungstag der Anmeldung: 04.06.2014
(73) Patentinhaber: Airbus Defence and Space GmbH, 85521 Ottobrunn (DE)
(72) Erfinder: STEINWANDEL, Jürgen, 88690 Uhldingen (DE); PIRINGER, Helmut, 85598 Baldham (DE)
(86) Internationale Anmeldenummer: PCT/DE2012/000762
(87) Internationale Veröffentlichungsnummer: WO 2013/013662

(56) Entgegenhaltungen:
- WO-A1-03/084810
- US-A- 1 992 976
- US-A- 2 470 461
- US-A- 3 208 839
- US-A- 3 669 526
- US-A- 3 880 496
- US-A1- 2005 068 629
- US-A1- 2005 200 937
- US-A1- 2009 241 424
- COPPINGER R: "INSPECTECH AIMS TO DARKEN 7E7 WINDOWS", FLIGHT INTERNATIONAL, REED BUSINESS INFORMATION, SUTTON SURREY, GB, Bd. 166, Nr. 4965, 21. Dezember 2004 (2004-12-21), Seite 26, XP001212562, ISSN: 0015-3710
- COPPINGER R: "SELF-DARKENING WINDOWS TESTED", FLIGHT INTERNATIONAL, REED BUSINESS INFORMATION, SUTTON SURREY, GB, Bd. 167, Nr. 4974, 1. März 2005 (2005-03-01), Seite 28, XP001224675, ISSN: 0015-3710

## Beschreibung

Die Erfindung betrifft ein Verfahren zum Herstellen einer Lichttransmissionsbeeinflussungsvorrichtung für ein Luftfahrzeugfenster, das wenigstens eine mit einer bestimmten Krümmung gekrümmte Fensterscheibe aufweist..

Bei der Erfindung geht es insbesondere um die Verdunklung von Kabinen von Luftfahrzeugen, wie insbesondere Passagierkabinen in Flugzeugen.

In vielen Flugzeugen finden sich noch heute Schieberollos zur Verdunklung eines Luftfahrzeugfensters. Diese müssen einzeln geschlossen oder geöffnet werden. Ferner weisen Schieberollos ein hohes Gewicht und einen hohen Platzbedarf auf, so dass in US 2008/0230653 A1 ein verdunkelbares Fenster für ein Luftfahrzeug vorgeschlagen wurde, das eine integrierte Steuerung und Energieversorgung aufweist. Die Verdunklung wird durch eine elektrochrome Vorrichtung erreicht.

Aus DE 101 01 100 A1 ist eine verdunkelbare Scheibenanordnung z.B. für eine Gebäudeverglasung bekannt, bei der die Verdunklung durch ein schaltbares, transmissives, elektrooptisches Element erreicht wird. Dieses Element ist innerhalb der Scheibenanordnung angeordnet.

US 2005/068629 A1 welche als nächstliegender Stand der Technik betrachtet wird, US 2009/241424 A1, US 3,669,526 A, WO 03/084810 A1, US 2005/200937 A1 und US 3,880,496 A zeigen ebenfalls verdunkelbare Scheibenanordnungen für Flugzeugfenster.

US 3,208,839 A, US 1,992,976 A und US 2,470,461 A offenbaren Verfahren zum Krümmen von Scheiben.
Aufgabe der Erfindung ist es, eine verbesserte Lichttransmissionsbeeinflussungsvorrichtung bereitzustellen.

Die Aufgabe wird durch das Verfahren nach Anspruch 1 gelöst.

Vorteilhafte Ausgestaltungen der Erfindung sind Gegenstand der Unteransprüche.

Die Erfindung schafft ein Verfahren zur Herstellung eines Luftfahrzeugfensters mit einer Lichttransmissionsbeeinflussungsvorrichtung, das wenigstens eine mit einer bestimmten Krümmung gekrümmte Fensterscheibe aufweist. Das Verfahren umfasst die Schritte: Vorkrümmen der zu formenden transparenten Scheibe durch Aufbringen einer Belastung quer zu einer Krümmrichtung der zu formenden transparenten Scheibe bei der Erweichungstemperatur, Krümmen einer ersten transparenten Scheibe, um sie an die bestimmte Krümmung anzupassen und Anordnen wenigstens eines Teils einer steuerbaren Lichttransmissionsvariationseinrichtung zur Veränderung der Lichttransmission durch das Luftfahrzeugfenster an der ersten transparenten Scheibe.

Die gekrümmte Fensterscheibe des Luftfahrzeugfensters ist vorzugsweise eine Fensterscheibe, die in einer Außenhaut eines Rumpfs des Luftfahrzeugs eingebaut ist. Rümpfe von Luftfahrzeugen sind üblicherweise gekrümmt, so dass Fensterscheiben eines in der Außenhaut eines Luftfahrzeugs eingebrachten Fensterscheiben normalerweise auch gekrümmt sind.

Die Krümmung der transparenten Scheibe und der Fensterscheibe soll als ein Krümmungsverlauf verstanden werden. Die Krümmung kann also über die transparente Scheibe oder die Fensterscheibe veränderlich sein oder kann eine einheitliche Krümmung aufweisen.

Durch das Verfahren wird Luftfahrzeugfenster mit einer Lichttransmissionsbeeinflussungsvorrichtung geschaffen, das wenigstens eine transparente Scheibe aufweist, die nicht planar ist. Vorzugsweise stützt die erste transparente Scheibe die Lichttransmissionsbeeinflussungsvorrichtung, so dass die Lichttransmissionsbeeinflussungsvorrichtung eine ähnliche, insbesondere die gleiche, Krümmung wie das Luftfahrzeugfenster aufweist. Die Krümmung der ersten transparenten Scheibe ist an die Krümmung der Fensterscheibe angepasst, insbesondere um optische Abbildungsfehler wie z.B. störende Reflexionen und/oder Doppelbilder zu vermeiden. Insbesondere kann die erste Krümmung der transparenten Scheibe gleich der Fensterscheibenkrümmung sein. Abweichungen sind möglich, z.B. nur eine bereichsweise Übereinstimmung oder eine leichte Krümmungsabweichung ohne optische Beeinträchtigung. In einem nächsten Schritt wird dann die Lichttransmissionsvariationseinrichtung an der ersten transparenten Scheibe angebracht. Die Lichttransmissionsvariationseinrichtung ist vorzugsweise elektrisch steuerbar, z.B. mittels eines Schalters. Mehrere Lichttransmissionsvariationseinrichtungen können auch zentral gemeinsam gesteuert werden.

Ein Vorteil der Lichttransmissionsbeeinflussungsvorrichtung ist, dass sie eine ähnliche, insbesondere gleiche, Krümmung wie das Luftfahrzeugfenster aufweist, so dass störende Reflexe zwischen der Lichttransmissionsbeeinflussungsvorrichtung und dem Luftfahrzeugfenster reduziert werden können. Gerade im Vergleich zu einer planaren Lichttransmissionsbeeinflussungsvorrichtung und einem gekrümmten Luftfahrzeugfenster kann eine besonders gute Reduktion unerwünschter Lichtstreuungs- und Lichtreflexionseinflüsse erzielt werden. So lassen sich vorzugsweise auch die Entstehung von Doppelbildern beim Betrachten durch das Luftfahrzeugfenster vermeiden.

Beispielsweise kann die erste transparente Scheibe direkt auf eine innen angeordnete Fensterscheibe des Luftfahrzeugfensters aufgebracht werden. Ein Teil der Lichttransmissionsvariationseinrichtung kann dann zwischen der ersten transparenten Scheibe und der gekrümmten Fensterscheibe des Luftfahrzeugfensters angeordnet sein. Dies stellt vorteilhafterweise eine besonders kompakte Bauweise des Luftfahrzeugfensters dar.

Es ist bevorzugt, dass das Verfahren weiter den Schritt Krümmen einer zweiten transparenten Scheibe, um sie an die bestimmte Krümmung anzupassen, umfasst. Es ist außerdem bevorzugt, dass das Verfahren durch den Schritt Anordnen wenigstens eines Teils der steuerbaren Lichttransmissionsvariationseinrichtung zwischen der ersten transparenten Scheibe und der zweiten transparenten Scheibe gekennzeichnet ist.

Bekannte Lichttransmissionsvariationseinrichtungen werden üblicherweise durch zwei transparente Scheiben gestützt. Die bevorzugte Ausführung des Verfahrens schafft also eine Lichttransmissionsbeeinflussungsvorrichtung mit ähnlichem Aufbau und zwei transparente Scheiben, so dass die Vorrichtung getrennt von einer gekrümmten Fensterscheibe des Luftfahrzeugfensters angeordnet werden kann und eine ähnliche, insbesondere die gleiche Krümmung wie die gekrümmte Fensterscheibe des Luftfahrzeugfensters aufweist. Auch hier können somit unterwünschte Reflexionen und die Entstehung von Doppelbildern vermieden werden.

Vorzugsweise ist das Verfahren durch gleichzeitiges Durchführen des Krümmens der ersten transparenten Scheibe und der zweiten transparenten Scheibe, um sie an die bestimmte Krümmung anzupassen, gekennzeichnet.

Es ist bevorzugt, dass dann die erste transparente Scheibe und die zweite transparente Scheibe die gleiche Krümmung aufweisen. Durch das gleichzeitige Krümmen der ersten transparenten Scheibe und der zweiten transparenten Scheibe kann ein besonders ökonomisches Herstellungsverfahren für die eine Lichttransmissionsbeeinflussungsvorrichtung bereitgestellt werden.

Es ist bevorzugt, dass das gleichzeitige Krümmen der ersten und zweiten transparenten Scheibe durch Herstellen einer Sandwich-Anordnung, welche die erste transparente Scheibe, die zweite transparente Scheibe und einen Abstandshalter aufweist, durchgeführt wird. Der Abstandshalter beabstandet die erste transparente Scheibe von der zweiten transparenten Scheibe um einen Abstand, der vorzugsweise einer Dicke der zwischen der ersten transparenten Scheibe und der zweiten transparenten Scheibe angeordneten Teils der Lichttransmissionsvariationseinrichtung entspricht.

Der Abstandshalter stellt vorzugsweise einen identischen Abstand zwischen der ersten und der zweiten transparenten Scheibe über ihre kompletten Ausdehnungen ein. Dadurch kann erreicht werden, dass die erste transparente Scheibe und die zweite transparente Scheibe eine identische Krümmung aufweisen und dass der Abstand zwischen der ersten transparenten Scheibe und der zweiten transparenten Scheibe nach dem Anordnen der Lichttransmissionsvariationseinrichtung über die komplette Ausdehnung der ersten und der zweiten transparenten Scheibe gleich ist. Dies ist bei einigen bekannten Lichttransmissionsvariationseinrichtungen von besonderer Bedeutung. Diese bevorzugten Ausführungsform stellt daher ein besonders effizientes Herstellungsverfahren einer Lichttransmissionsbeeinflussungsvorrichtung dar, bei dem eine hohe Genauigkeit in Hinblick auf die Krümmung und den Abstand der ersten und der zweiten transparenten Scheibe erreicht werden kann.

Bevorzugt umfasst das Verfahren gemeinsames Formen der aufeinandergelegten ersten und zweiten transparenten Scheibe zwischen einer konvex gekrümmten Formfläche und einer konkav gekrümmten Formfläche einer Biegeformeinrichtung.

Vorzugsweise wird die erste transparente Scheibe und die zweite transparente Scheibe zusammen mit dem Abstandshalter in die Biegeformeinrichtung eingebracht und mittels einer externen Kraft, die beispielsweise die Gewichtskraft eines Teils der Biegeformeinrichtung sein kann, geformt. Die Krümmung der konvex gekrümmten Formfläche und die Krümmung der konkav gekrümmten Formfläche entspricht dabei im Wesentlichen der bestimmten Krümmung der Fensterscheibe des Luftfahrzeugfensters.

Bevorzugt umfasst das Verfahren Ausschneiden wenigstens der zu formenden transparenten Scheibe aus einem Halbzeug, vorzugsweise mittels Laserschneidens.

Vorzugsweise zu Beginn des Verfahrens wird die erste transparente Scheibe und/oder die zweite transparente Scheibe aus einem Halbzeug, wie beispielsweise einer größeren Scheibe, zum Beispiel aus Glas oder Kunststoff, ausgeschnitten. Dies geschieht vorzugsweise mittels Laserschneidens, da dies die Entstehung von Staub reduziert. Ferner entstehen beim Laserschneiden im Vergleich zu einem Ritzverfahren, das auch verwendet werden kann, weniger Risse, die später zu größeren Beschädigungen der Lichttransmissionsbeeinflussungsvorrichtung werden können.

Bevorzugt umfasst das Verfahren Temperieren der zu formenden transparenten Scheibe auf eine Erweichungstemperatur, die kleiner als die Schmelztemperatur der zu formenden transparenten Scheibe ist, und Krümmen der durch auf die Erweichungstemperatur gebrachten transparenten Scheibe.

Bei Glas ist die Erweichungstemperatur beispielsweise unterhalb einer Transformationstemperatur von Glas. Die Transformationstemperatur liegt bei ungefähr 550° C, während die Erweichungstemperatur im Bereich von 490° C bis 530° C und insbesondere ungefähr 510° C ist.

Bei Kunststoff ist die Erweichungstemperaturvorzugsweise die Wärmeformbeständigkeitstemperatur des Kunststoffs. Als Beispiel liegt diese bei Polymethylmethacrylat (PMMA) bei 115° C. Die Erweichungstemperatur liegt im Bereich von ± 20 % um die Wärmeformbeständigkeitstemperatur. Dieser Bereich um die Wärmeformbeständigkeitstemperatur kann auch kleiner sein, beispielsweise ± 10 %, ± 5 % oder ± 3 %.

Bei der Erweichungstemperatur ist das Material der ersten oder zweiten transparenten Scheibe noch nicht flüssig und kann daher gut gehandhabt werden, da es noch als ein zusammenhängendes Werkstück geformt werden kann.

Quer zu der Krümmrichtung soll dahingehend verstanden werden, dass wenigstens eine Richtungskomponente der aufgebrachten Belastung quer der Krümmrichtung zeigt. Die Krümmrichtung ist dabei vorzugsweise senkrecht zu einer noch nicht gekrümmten, planaren Längsausdehnung der transparenten Scheibe. Dieser Schritt bietet gerade bei Kunststoff den Vorteil, dass die erste und/oder zweite transparente Scheibe schon ein wenig vorgekrümmt ist, bevor sie in der Biegeformeinrichtung auf ihre letztendliche Krümmung gebracht wird. Dadurch lassen sich Spannungen in der zu formenden transparenten Scheibe beim Krümmen in der Biegeformeinrichtung reduzieren.

Bevorzugt umfasst das Verfahren entweder das Anordnen einer Schicht aus einem elektrochromen Material oder das Anordnen einer Polarisationseinrichtung zum Polarisieren von in das Luftfahrzeugfenster einfallendem Licht, um in einer Polarisationsrichtung polarisierte Lichtstrahlung zu erzeugen, einer Lichtfiltereinrichtung, welche zum Durchlassen von in einer Polarisationsdurchlassrichtung polarisiertem Licht und zum Sperren von einer in einer Polarisationssperrrichtung polarisiertem Licht ausgebildet ist, und einer steuerbaren Polarisationsrichtungsdreheinrichtung zum steuerbaren Relativverdrehen der Polarisationsrichtung relativ zu der Luftfiltereinrichtung, um so den Lichtdurchgang zu steuern.

Die Schicht aus elektrochromem Material ist vorzugsweise zwischen der ersten und der zweiten transparenten Scheibe angeordnet. Elektrochrome Materialien sind bekannt und verändern ihre Lichtabsorption bzw. Reflektion in Abhängigkeit einer angelegten Spannung.

Die Polarisationseinrichtung ist zum Beispiel ein erster Polarisationsfilter und die Lichtfiltereinrichtung ist ein zweiter Polarisationsfilter, dessen Polarisationsrichtung zu der Polarisationsrichtung des ersten Polarisationsfilters um 90 Grad gedreht ist. Die steuerbare Polarisationsrichtungsdreheinrichtung ist zum Beispiel eine steuerbare Polarisationsrichtungsveränderungseinrichtung zum steuerbaren Verändern der Polarisationsrichtung durchgehender Lichtstrahlung. Als Beispiel einer Polarisationsrichtungsveränderungseinrichtung sei eine nematische Flüssigkristall-Drehzelle genannt.

Das Licht trifft auf den ersten Polarisationsfilter und polarisiert das Licht. Ist keine Spannung in der Polarisationsrichtungsdreheinrichtung angelegt, wird beispielsweise die Polarisationsrichtung des polarisierten Lichts durch die Flüssigkristall-Drehzelle um 90 Grad gedreht, so dass diese mit der Polarisationsrichtung des zweiten Polarisationsfilters übereinstimmt. Das Licht kann daher die Lichttransmissionsvariationseinrichtung passieren. Wird eine Spannung angelegt, verändern sich die Moleküle der nematischen Flüssigkristall-Drehzelle, so dass eine Drehung der Polarisationsrichtung des Lichts nicht mehr erzeugt wird, und die Polarisationsrichtung des Lichts vor den zweiten Polarisationsfilter senkrecht zu der Polarisationsrichtung des zweiten Polarisationsfilters ist. Das Licht wird daher an dem zweiten Polarisationsfilter geblockt.

Der erste Polarisationsfilter ist vorzugsweise an einer Außenseite der ersten transparenten Scheibe angeordnet, während der zweite Polarisationsfilter vorzugsweise an einer Außenseite der zweiten transparenten Scheibe angeordnet ist.

Ein weiterer Aspekt der Erfindung ist eine Lichttransmissionsbeeinflussungsvorrichtung für ein Luftfahrzeugfenster, das wenigstens eine gekrümmte Fensterscheibe ausweist, wobei die Lichttransmissionsbeeinflussungsvorrichtung eine steuerbare Lichttransmissionsvariationseinrichtung zur Veränderung der Lichttransmission durch die Lichttransmissionsbeeinflussungsvorrichtung und eine erste transparente Scheibe, die mit einer ersten Krümmung gekrümmt ist, umfasst.

Die erste transparente Scheibe ist vorzugsweise nicht planar. Die Lichttransmissionsbeeinflussungsvorrichtung weist bevorzugt die beim Herstellungsverfahren der Lichttransmissionsbeeinflussungsvorrichtung genannten Vorteile und vorzugsweise die dabei genannten Ausführungsformen auf.

Es ist bevorzugt, dass die Lichttransmissionsbeeinflussungsvorrichtung eine zweite transparente Scheibe aufweist, die mit einer zweiten Krümmung gekrümmt ist. Vorzugsweise ist die zweite Krümmung an die erste Krümmung angepasst. Besonders bevorzugt ist die zweite Krümmung gleich der ersten Krümmung. Die erste und die zweite Krümmung sind vorzugsweise an die Krümmung der Fensterscheibe angepasst, um Doppelbilder und Reflexionen zu vermeiden.

Vorzugsweise ist ein Teil der Lichttransmissionsvariationseinrichtung zwischen der ersten transparenten Scheibe und der zweiten transparenten Scheibe angeordnet ist. Es ist ferner bevorzugt, dass die Lichttransmissionsvariationseinrichtung eine Schicht aus einem elektrochromen Material umfasst. Alternativ ist bevorzugt, dass die Lichttransmissionsvariationseinrichtung eine Polarisationseinrichtung zum Polarisieren von in das Luftfahrzeug einfallendem Licht, um in eine Polarisationsrichtung polarisierte Lichtstrahlung zu erzeugen, wobei weiter vorzugsweise die Polarisationseinrichtung einen ersten Polarisationsfilter aufweist, eine Lichtfiltereinrichtung, welche zum Durchlassen von in einer Polarisationsdurchlassrichtung polarisiertem Licht und zum Sperren von in einer Polarisationssperrrichtung polarisiertem Licht ausgebildet ist, wobei vorzugsweise die Lichtfiltereinrichtung einen zweiten Polarisationsfilter aufweist, und eine steuerbare Polarisationsrichtungsdreheinrichtung zum steuerbaren Relativverdrehen der Polarisationsrichtung relativ zu der Lichtfiltereinrichtung, um so den Lichtdurchgang zu steuern, wobei vorzugsweise die Polarisationsrichtungsdreheinrichtung eine zwischen den Polarisationsfiltern angeordnete steuerbare Polarisationsrichtungsveränderungseinrichtung zum steuerbaren Verändern der Polarisationsrichtung durchgehender Lichtstrahlung aufweist, umfasst.

Auch hierzu gelten vorzugsweise die oben genannten Erläuterungen und Vorteile.

Gemäß eines weiteren Aspekts schafft die Erfindung ein Luftfahrzeugfenster zum Einbau in einen Rumpf eines Luftfahrzeugs mit einer außen anzuordnenden strukturellen Kabinenfensterscheibenkonstruktion, einer innen anzuordnenden Abdeckscheibe und mit einer Lichttransmissionsbeeinflussungsvorrichtung gemäß einer der oben genannten Ausführungsformen, wobei die strukturelle Kabinenfensterscheibenkonstruktion wenigstens eine Fensterscheibe zum wärmeisolierenden Einbau an einer Außenhaut des Rumpfs aufweist und wobei die Fensterscheibe eine bestimmte Krümmung aufweist. Die erste Krümmung der ersten transparenten Scheibe ist an die Krümmung der Fensterscheibe angepasst.

Die Fensterscheibe der Kabinenfensterscheibenkonstruktion und die transparente Scheibe der Lichttransmissionsbeeinflussungsvorrichtung weisen demnach eine ähnliche, insbesondere die gleiche, Krümmung auf. Die Fensterscheibe der Kabinenfensterscheibenkonstruktion und die transparente Scheibe der Lichttransmissionsbeeinflussungsvorrichtung sind vorzugsweise nicht planar. Eine Kabinenwand bildet beispielsweise ein Teil des Rumpfs.

Das Luftfahrzeugfenster weist bevorzugt die beim Herstellungsverfahren der Lichttransmissionsbeeinflussungsvorrichtung genannten Vorteile und vorzugsweise die dabei genannten Ausführungsformen auf.

Es ist bevorzugt, dass die Lichttransmissionsbeeinflussungsvorrichtung zwischen der Kabinenfensterscheibenkonstruktion und der Abdeckscheibe angeordnet ist, wobei vorzugsweise die Lichttransmissionsbeeinflussungsvorrichtung näher an der Kabinenfensterscheibenkonstruktion angeordnet ist.

Alternativ ist bevorzugt, dass die Lichttransmissionsbeeinflussungsvorrichtung direkt mit der Abdeckscheibe und/oder mit der Fensterscheibe der Kabinenfensterscheibenkonstruktion verbunden ist.

Auch hier gelten im Hinblick auf die alternativen Ausführungsformen die oben genannten Erläuterungen und Vorteile.

Ein weiterer Aspekt der Erfindung ist ein Rumpf für ein Luftfahrzeug, der mit wenigstens einem Luftfahrzeugfenster, so wie es oben beschrieben wurde, versehen ist.

Darüber hinaus ist ein Aspekt der Erfindung ein Luftfahrzeug mit einem Rumpf, so wie er oben definiert wurde, bereit.

Ein Aspekt der Erfindung ist ferner ein Luftfahrzeugfenster zum Einbau in eine Kabinenwand des Luftfahrzeugs mit einer außen anzuordnenden strukturellen Kabinenfensterscheibenkonstruktion, einer innen anzuordnenden Abdeckscheibe und mit einer zur Beeinflussung einer Lichttransmission durch ein Fenster des Luftfahrzeuges. Die Lichttransmissionsbeeinflussungsvorrichtung umfasst eine Polarisationseinrichtung zum Polarisieren von in das Fenster einfallendem Licht, um in eine Polarisationsrichtung polarisierte Lichtstrahlung zu erzeugen, eine Lichtfiltereinrichtung, welche zum Durchlassen von in einer Polarisationsdurchlassrichtung polarisiertem Licht und zum Sperren von in einer Polarisationssperrrichtung polarisiertem Licht ausgebildet ist, und eine steuerbare Polarisationsrichtungsdreheinrichtung zum steuerbaren Relativverdrehen der Polarisationsrichtung relativ zu der Lichtfiltereinrichtung, um so den Lichtdurchgang zu steuern. Die Polarisationsrichtungsdreheinrichtung weist eine nematsiche Drehzelle auf, die direkt mit der Abdeckscheibe und/oder mit einer Innenseite einer der Abdeckscheibe gegenüberliegenden Fensterscheibe der Kabinenfensterscheibenkonstruktion verbunden ist.

Demnach wird die Transmission von Licht durch ein Luftfahrzeugfenster durch Polarisierung des Lichtes und Relativeinstellung des polarisierten Lichts zu einer Lichtfiltereinrichtung beeinflusst.

Beispielsweise weist die Polarisationseinrichtung ein erstes Polarisationsfilter auf und die Lichtfiltereinrichtung weist ein zweites Polarisationsfilter auf.

In einer einfachsten Version würden dann einfach die Polarisationsfilter relativ zueinander verdreht, um so den Lichtdurchgang zu beeinflussen. Dadurch kann man die Lichttransmission zwischen einer nahezu maximalen Transmission und einer im Wesentlichen vollständigen Verdunkelung schalten und beeinflussen. Hierzu könnte beispielsweise eines der Polarisationsfilter steuerbar relativ zu dem anderen Polarisationsfilter angeordnet sein.

Bevorzugt sollen jedoch mechanische Einrichtungen vermieden werden, um Gewicht und Wartungsarbeiten einzusparen und ein schnelles Schalten zu ermöglichen.

Daher ist gemäß einer besonders bevorzugten Ausgestaltung vorgesehen, dass die Polarisationsrichtungsdreheinrichtung eine steuerbare oder schaltbare Polarisationsrichtungsveränderungseinrichtung zwischen der Polarisationseinrichtung und der Lichtfiltereinrichtung vorgesehen ist, um die Polarisationsrichtung durchgehender Lichtstrahlung zu drehen.

Vorzugsweise ist vorgesehen, dass das erste und das zweite Polarisationsfilter feststehend angeordnet sind und dass die Polarisationsrichtungsdreheinrichtung eine zwischen den Polarisationsfiltern angeordnete steuerbare Polarisationsrichtungsveränderungseinrichtung zum steuerbaren Verändern der Polarisationsrichtung durchgehender Lichtstrahlung aufweist.

Beispiele für nematische Drehzellen sind TN-Zellen (aus dem Englische "twisted nematic cell") oder Schadt-Helfrich-Zellen. Ein grundsätzlicher Aufbau einer solchen Zelle ist beispielsweise in der CH 532 261 B beschrieben.

Derartige nematische Zellen finden bisher Anwendung bei FlüssigkristallAnzeigen, wie z.B. LCD-Bildschirmen.

In der nematischen Drehzelle ist eine Flüssigkristallschicht vorgesehen, an die eine elektrische Spannung angelegt werden kann. Bei allmählicher Erhöhung der Spannung über der Flüssigkeitskristallschicht rotieren die Flüssigkristallmoleküle so, dass sie sich zunehmend parallel zum elektrischen Feld ausrichten.

Mit einer entsprechenden Flüssigkeitskristallschicht lässt sich somit einfach durch Anlegen eines elektrischen Feldes eine Änderung der Polarisationsrichtung erreichen. Bei der eine solche Zelle nutzenden Ausführungsform der Erfindung wird wenigstens eine solche Zelle zum Einbinden in eine Konstruktion eines Luftfahrzeugfensters ausgebildet. Eventuell wird - je nach Anforderung - die Fläche des Luftfahrzeugfensters in mehrere Zellen aufgeteilt, wobei eine elektrische Spannung zur Steuerung der Transmission an die einzelnen Zellen angelegt werden kann.

Weitere Aspekte der Erfindung werden in den folgenden Klauseln erläutert und/oder definiert:
Klausel 1: Lichttransmissionsbeeinflussungsvorrichtung zur Beeinflussung einer Lichttransmission durch ein Fenster eines Luftfahrzeuges, mit einer Polarisationseinrichtung zum Polarisieren von in das Fenster einfallendem Licht, um in eine Polarisationsrichtung polarisierte Lichtstrahlung zu erzeugen, einer Lichtfiltereinrichtung, welche zum Durchlassen von in einer Polarisationsdurchlassrichtung polarisiertem Licht und zum Sperren von in einer Polarisationssperrrichtung polarisiertem Licht ausgebildet ist, und einer steuerbaren Polarisationsrichtungsdreheinrichtung zum steuerbaren Relativverdrehen der Polarisationsrichtung relativ zu der Lichtfiltereinrichtung, um so den Lichtdurchgang zu steuern.
Klausel 2: Lichttransmissionsbeeinflussungsvorrichtung nach Klausel 1, dadurch gekennzeichnet,
   dass die Polarisationseinrichtung einen ersten Polarisationsfilter aufweist und dass die Lichtfiltereinrichtung einen zweiten Polarisationsfilter aufweist.
Klausel 3: Lichttransmissionsbeeinflussungsvorrichtung nach Klausel 2, dadurch gekennzeichnet,
   dass der erste und der zweite Polarisationsfilter feststehend angeordnet sind und dass die Polarisationsrichtungsdreheinrichtung eine zwischen den Polarisationsfiltern angeordnete steuerbare Polarisationsrichtungsveränderungseinrichtung zum steuerbaren Verändern der Polarisationsrichtung durchgehender Lichtstrahlung aufweist.
Klausel 4: Lichttransmissionsbeeinflussungsvorrichtung nach Klausel 3, dadurch gekennzeichnet,
   dass die Polarisationsrichtungsveränderungseinrichtung eine nematische Flüssigkristall-Drehzelle aufweist.
Klausel 5: Lichttransmissionsbeeinflussungsvorrichtung nach einer der voranstehenden Klauseln,
   gekennzeichnet durch eine signalbetätigbare Steuereinrichtung zum Steuern der Polarisationsrichtungsdreheinrichtung, um den Lichtdurchsatz zu steuern.
Klausel 6: Lichttransmissionsbeeinflussungsvorrichtung nach Klausel 5, dadurch gekennzeichnet,
   dass die Steuereinrichtung als Schalteinrichtung ausgebildet ist oder eine solche aufweist, um mindestens zwischen einem Maximaldurchlasszustand, in dem die polarisierte Lichtstrahlung mit maximaler Stärke durchgelassen wird, und einem vollständigen Sperrzustand, in dem keine Lichtstrahlung durchgelassen wird, zu schalten.
Klausel 7: Luftfahrzeugfenster zum Einbau in eine Kabinenwand eines Luftfahrzeugs mit einer außen anzuordnenden strukturellen Kabinenfensterscheibenkonstruktion, einer innen anzuordnenden Abdeckscheibe und mit einer Lichttransmissionsbeeinflussungsvorrichtung nach einer der voranstehenden Klauseln.
Klausel 8: Luftfahrzeugfenster nach Klausel 7,
   dadurch gekennzeichnet,
   dass die strukturelle Kabinenfensterscheibenkonstruktion wenigstens zwei beabstandete gekrümmte Fensterscheiben zum wärmeisolierenden Einbau an der Außenhaut der Kabinenwand aufweist.
Klausel 9: Luftfahrzeugfenster nach einer der Klauseln 7 oder 8,
   dadurch gekennzeichnet,
   dass die Polarisationsrichtungsdreheinrichtung zwischen der Kabinenfensterscheibenkonstruktion und der Abdeckscheibe angeordnet ist.
Klausel 10: Luftfahrzeugfenster nach einer der Klauseln 7 oder 8,
   dadurch gekennzeichnet,
   dass die Polarisationsrichtungsdreheinrichtung eine nematische Drehzelle aufweist, die direkt mit der Abdeckscheibe und/oder mit einer Fensterscheibe der Kabinenfensterscheibenkonstruktion verbunden ist.
Klausel 11: Luftfahrzeugfenster nach Klausel 10,
   dadurch gekennzeichnet,
   dass die nematische Drehzelle und die Abdeckscheibe bzw. Fensterscheibe in einer Verbundkonstruktion aus Glas und Kunststoff integriert sind.
Klausel 12: Kabinenwand für ein Luftfahrzeug, versehen mit wenigstens einem Luftfahrzeugfenster nach einer der Klauseln 7 bis 11.
Klausel 13: Luftfahrzeug mit einer Kabinenwand nach Klausel 12.

Gemäß einer weiteren bevorzugten Ausgestaltung ist zum Steuern der Polarisationsrichtungsdreheinrichtung eine signalbetätigbare Steuereinrichtung vorgesehen, um so den Lichtdurchsatz durch die Lichttransmissionsbeeinflussungsvorrichtung zu steuern. Bei dem Beispiel mit der nematischen Drehzelle weist die Steuereinrichtung z.B. eine Einrichtung zum Anlegen eines elektrischen Feldes auf.

In einfachster Ausbildung ist die Steuereinrichtung als Schalteinrichtung ausgebildet, um zwischen wenigstens zwei Zuständen zu schalten. Die beiden Zustände können zwei unterschiedliche Transmissionsgrade liefern. Vorzugsweise ist in einer ersten Stellung ein maximaler Lichtstrahlungsdurchsatz durch die Lichttransmissionsbeeinflussungsvorrichtung möglich und in einer zweiten Stellung ist vorzugsweise eine vollständige Sperrung des Lichtes vorgesehen.

Die strukturelle Kabinenfensterscheibenkonstruktion dient vorzugsweise hauptsächlich dem Zwecke, die Kabine, wie insbesondere eine Passagierkabine, gegen die feindlichen Außenbedingungen während des Fluges abzuschirmen. Die Kabinenfensterscheibenkonstruktion weist vorzugsweise eine wärmeisolierende und/oder schallisolierende sowie druckisolierende Konstruktion auf. Vorzugsweise sind hierzu wenigstens zwei Fensterscheiben vorgesehen. Die Fensterscheiben sind weiter vorzugsweise entsprechend einer Krümmung einer umgebenden Kabinenwand gekrümmt ausgebildet, so dass sich die Kabinenfensterscheibenkonstruktion in bevorzugter Ausgestaltung möglichst gut in die Außenkontur der Kabinenwand einfügt.

In bevorzugter Ausgestaltung ist die schaltbare oder steuerbare Polarisationsrichtungsdreheinrichtung im Inneren des Luftfahrzeugfensters geschützt zwischen der Kabinenfensterscheibenkonstruktion und der Abdeckscheibe angeordnet. Es ist auch möglich, die Polarisationsrichtungsdreheinrichtung als Teil einer Abdeckscheibenverbundkonstruktion oder als Teil der Kabinenfensterscheibenkonstruktion auszubilden.

In der erfindungsgemäßen Ausgestaltung weist die Polarisationsrichtungsdreheinrichtung eine nematische Drehzelle auf, die direkt mit einer der Scheiben verbunden ist. Beispielsweise kann eine Flüssigkeitskristalizelle als Teil einer Verbundkonstruktion, die eine der Scheiben bildet, vorgesehen sein. Z.B. kann die Abdeckscheibe ein Teil einer Verbundkonstruktion aus Glas und Kunststoff sein, in der die nematische Drehzelle integriert ist. In einer alternativen oder zusätzlichen Ausgestaltung kann eine nematische Drehzelle - z.B. an eine Krümmung angepasst - Teil einer Glas-Kunststoff-Verbundkonstruktion sein, die eine der Scheiben der Kabinenfensterscheibenkonstruktion bildet.

Ein weiterer Aspekt der Erfindung ist eine mit einem solchen Luftfahrzeugfenster versehene Kabinenwand für ein Luftfahrzeug.

Ein Aspekt der Erfindung ist ferner ein Luftfahrzeug mit einer solchen Kabinenwand, die ein Luftfahrzeugfenster mit der Lichttransmissionsbeeinflussungsvorrichtung aufweist.

Ausführungsformen der Erfindung sollen exemplarisch anhand der nachstehenden Figuren erklärt werden. Darin zeigen:

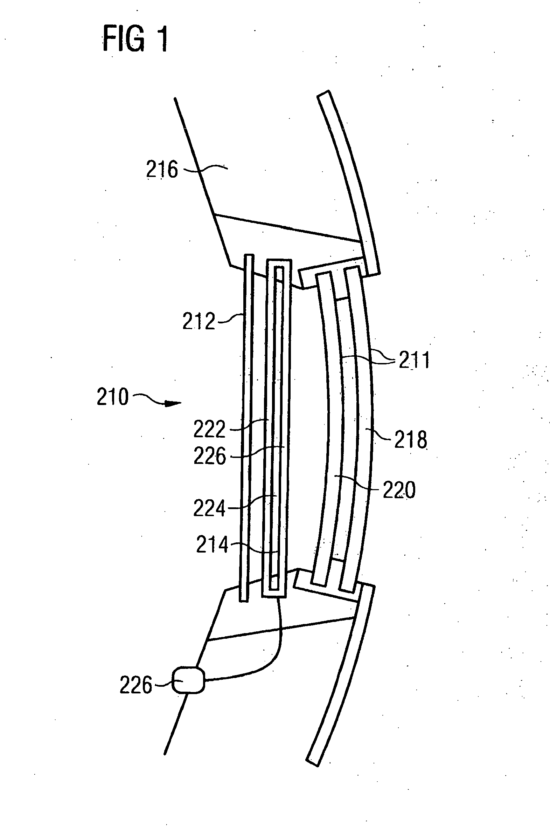

- Fig. 1: einen Querschnitt durch ein Luftfahrzeugfenster mit einer Lichttransmissionsbeeinflussungsvorrichtung zu Erläuterungszwecken;
- Fig. 2: eine Lichttransmissionsbeeinflussungsvorrichtung gemäß einer ersten Ausführungsform, in einem eine Lichttransmission ermöglichten Schaltzustand;
- Fig. 3: die Lichttransmissionsbeeinflussungsvorrichtung gemäß Fig. 2 in einem eine Lichttransmission verhindernden Schaltzustand;
- Fig. 4: eine Lichttransmissionsbeeinflussungsvorrichtung gemäß einer weiteren Ausführungsform mit einer Schicht aus einem elektrochromen Material;
- Fig. 5: einen Querschnitt durch ein Luftfahrzeugfenster mit einer erfindungsgemäßen Lichttransmissionsbeeinflussungsvorrichtung;
- Fig. 6: ein Flussdiagramm des Herstellungsverfahrens der Lichttransmissionsbeeinflussungsvorrichtung;
- Fig. 7a-7c: Verfahrensschritte bei der Krümmung einer ersten und einer zweiten transparenten Scheibe;
- Fig. 8: einen Temperaturverlauf bei der Krümmung der ersten und zweiten transparenten Scheibe; und
- Fig. 9: Verfahrensschritte bei der Krümmung einer ersten und zweiten transparenten Scheibe, die aus Kunststoff hergestellt ist.

Das Flugzeugfenster 210 hat eine Außenverglasung 211, eine innen angeordnete Innenscheibe 212 und als Lichttransmissionsbeeinflussungsvorrichtung eine elektrochrome Vorrichtung 214. Das Flugzeugfenster 210 ist in einem Körper 216 eines Flugzeugs angeordnet. Die Außenverglasung 211 weist eine äußere Scheibe 218 und eine innere Scheibe 220 auf. Die Verglasung 210 ist wie der Rumpf 216 des Luftfahrzeugs gebogen. Die elektrochrome Vorrichtung 214 hat eine innere Trägerscheibe 222, eine elektrochrome Schicht 224 und eine äußere Trägerscheibe 226. Die elektrochrome Vorrichtung 214 ist planar und zwischen der Innenscheibe 212 und der Außenverglasung 210 angeordnet. Zur Verdunklung der elektrochromen Vorrichtung 214 kann die elektrochrome Vorrichtung 214 über einen Schalter 226 gesteuert werden.

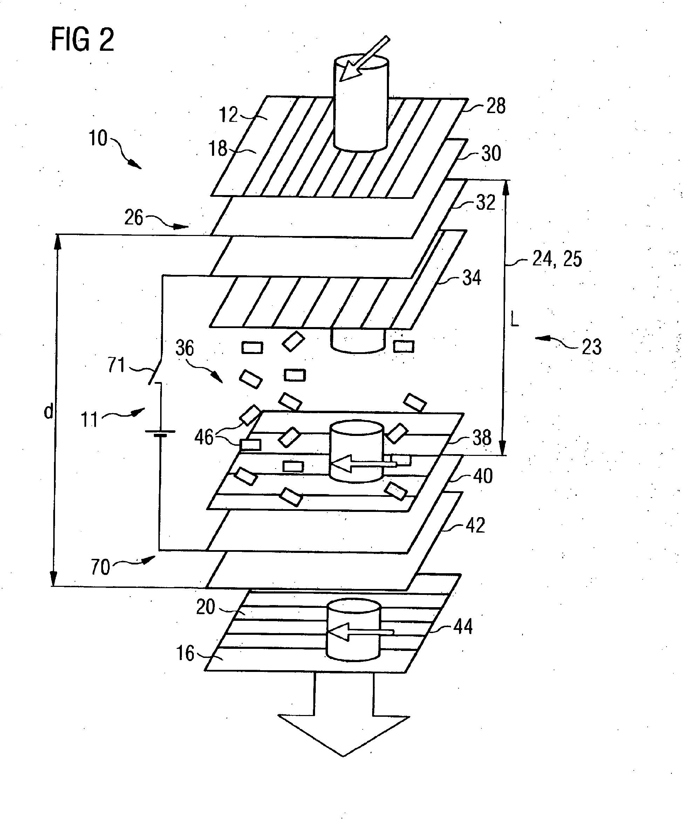

Anhand der Fig. 2-4 soll der Aufbau und die Funktionsweise einer Lichttransmissionsvariationseinrichtung 11 einer Lichttransmissionsbeeinflussungsvorrichtung 10 dargestellt werden. Die Lichttransmissionsbeeinflussungsvorrichtung 10 hat die Lichttransmissionsvariationseinrichtung 11, eine erste transparente Scheibe und eine zweite transparente Scheibe 42. Die Lichttransmissionsvariationseinrichtung 11 weist eine Polarisationsrichtungsdreheinrichtung 14, eine Lichtfiltereinrichtung 16 und eine Polarisationsrichtungsveränderungseinrichtung 22, eine erste Elektronik 32, eine erste Orientierungsschicht 34, eine zweite Orientierungsschicht 38 und eine zweite Elektrode 40 auf.

Die Lichttransmissionsbeeinflussungsvorrichtung 10 weist die Polarisationseinrichtung 12 zum Polarisieren von in das Fenster einfallendem Licht auf, um dadurch in eine Polarisationsrichtung polarisierte Lichtstrahlung zu erzeugen. Die Lichtfiltereinrichtung 16 filtert polarisierte Strahlung derart, dass in einer Durchlassrichtung polarisiertes Licht hindurchgelassen wird und in einer Sperrrichtung polarisiertes Licht gesperrt wird. Die Polarisationsrichtungsdreheinrichtung 14 ist zur Relativdrehung der Polarisationsrichtung der Lichtstrahlung relativ zu der Lichtfiltereinrichtung 16 ausgebildet.

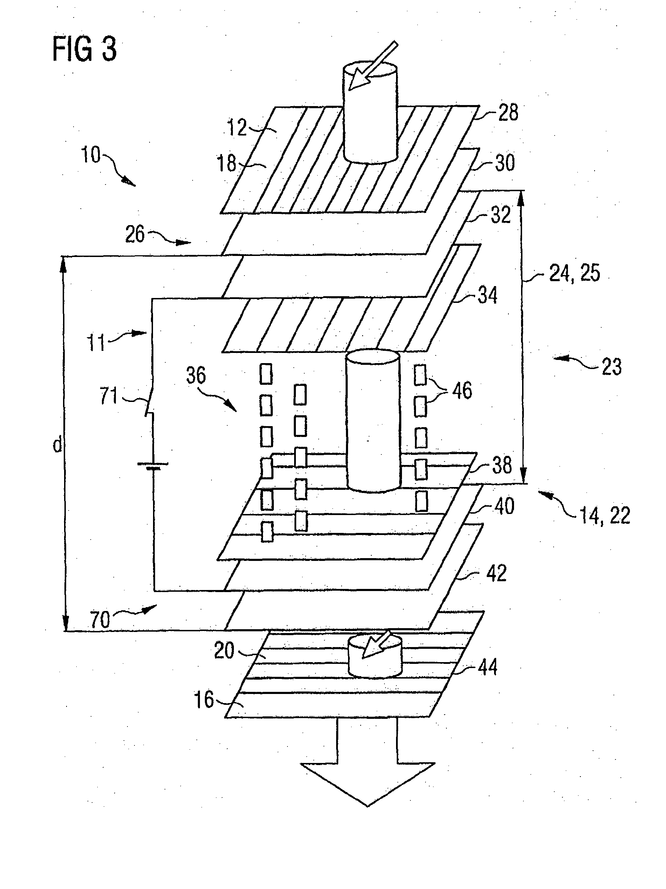

In der in Fig. 2 und 3 dargestellten bevorzugten Ausgestaltung der Lichttransmissionsbeeinflussungsvorrichtung 10 weist die Polarisationseinrichtung 12 ein erstes, in einer ersten Richtung ausgerichtetes Polarisationsfilter 18 auf, während die Lichtfiltereinrichtung 16 ein zweites, in einer zweiten Richtung ausgerichtetes Polarisationsfilter 20 aufweist. Zwischen den beiden Polarisationsfiltern 18, 20 ist eine Polarisationsrichtungsveränderungseinrichtung 22 angeordnet, mittels der sich die Polarisationsrichtung polarisierten Lichts schaltbar oder steuerbar verändern lässt.

In einer bevorzugten Ausgestaltung der Polarisationsrichtungsveränderungseinrichtung 22 weist diese eine nematische Drehzelle 24, insbesondere eine TN-Zelle 23 auf. Die TN-Zelle 23 wird auch Schadt-Helfrich-Zelle genannt. Sie weist ein nematisches Flüssigkristall 25 auf. Allgemein wird ein LCD-System 26 in TN-Technologie als Polarisationsrichtungsveränderungseinrichtung 22 verwendet.

Ein Abstand der ersten 30 und zweiten transparenten Scheibe 42 entspricht der Dicke des Teils der Lichttransmissionsvariationseinrichtung 11, der zwischen der ersten 30 und der zweiten transparenten Scheibe 42 angeordnet ist. In dem in Figuren 2 und 3 gezeigten Ausführungsbeispiel setzt sich dieser Teil aus der ersten 32 und zweiten Elektrode 42, der ersten 34 und zweiten Orientierungsschicht 38 sowie der nematischen Drehzelle 24 zusammen.

Im Folgenden wird das Funktionsprinzip einer TN-Zelle 23 als Flugzeugfenster anhand der Fig. 2 und 3 näher erläutert.

Die nematische Drehzelle 24 weist einen als erstes Polarisationsfilter 18 wirkenden ersten Polarisator 28 auf, der auf einem durch die erste transparente Scheibe 30 gebildeten ersten Substrat aufgebracht ist. Die erste transparente Scheibe 30 kann z.B. als Glas oder PMMA ausgebildet sein. Weiter ist auf der ersten transparenten Scheibe 30 die erste Elektrode - insbesondere ITO-Elektrode - und die erste Orientierungsschicht (insbesondere aus Polymer) aufgebracht. Das so gebildete Substrat aus erstem Polarisator 28, erster transparenter Scheibe 30, erster Elektrode 32 und erster Orientierungsschicht 34 begrenzt auf einer Seite eine Flüssigkristallschicht 36, wobei auf der gegenüberliegenden anderen Seite der Flüssigkristallschicht 36 ein spiegelbildlich wie das erste Substrat ausgebildetes zweites Substrat angeordnet ist.

Demnach folgt bei dem zweiten Substrat auf die Flüssigkristallschicht 36 die zweite Orientierungsschicht 38 und die zweite Elektrode 40 - insbesondere ITO-Elektrode -, die auf einer zweiten transparenten Scheibe (z.B. aus Glas oder PMMA) auf einer Seite angeordnet sind, wobei die andere Seite der zweiten transparenten Scheibe 42 mit einem zweiten Polarisator 44 versehen ist, der das zweite Polarisationsfilter 20 bildet.

In der nematischen Drehzelle 24 bilden Flüssigktistallmoleküle 46 im spannungsfreien Zustand eine kontinuierliche Verschraubung von 90° aus, der die Polarisationsrichtung des beim Eintritt in die Zelle 24 linear polarisierten Lichtes folgen kann. Ist der zweite Polarisator 44 senkrecht zum ersten Polarisator 28 angeordnet, kann das Licht die Zelle im spannungsfreien Zustand durchqueren; die Zelle 24 ist transparent. Diese Betriebsart wird auf dem Gebiet der LCD-Technik als "Normally-White-Mode" bezeichnet.

Polarisiertes Licht wird in der helikalen Struktur der Flüssigkristallmoleküle 46 um 90° gedreht. Das Licht kann den gekreuzt stehenden zweiten Polaristor 44 passieren, wie dies in Fig. 2 dargestellt ist.

Legt man jedoch ein elektrisches Feld zwischen den beiden Elektroden 32, 40 an, dann rotieren bei allmählicher Erhöhung der Spannung über der Flüssigkristallschicht 36 die Flüssigkristallmoleküle so, dass sie sich zunehmend parallel zum elektrischen Feld ausrichten. Die Moleküle in den Orientierungsschichten 34, 38 hingegen behalten ihre Ausrichtung auch bei hohen anliegenden Spannungen bei.

Mit zunehmender Ausrichtung parallel zum elektrischen Feld nimmt die Rotation der Polarisationsrichtung ab und es erfolgt eine zunehmende Absorption des Lichtes im zweiten Polarisator 44, der senkrecht zum ersten Polarisator 28 ausgerichtet ist. Damit nimmt die Transparenz der Zelle 24 mit zunehmender Spannung kontinuierlich ab.

Fig. 3 zeigt die Situation bei voll anliegendem elektrischen Feld. Einfallendes Licht erfährt keine Doppelbrechung und wird vom zweiten Polarisator 44 absorbiert. Demnach zeigen die Fig. 2 und 3 zwei mögliche Schaltzustände der schaltbaren Polarisationsrichtungsdreheinrichtung 14, wobei Fig. 2 einen maximalen Durchgang und Fig. 3 eine vollständige Sperrung darstellen.

Durch eine entsprechende Steuereinrichtung 70, die die Spannung und damit die elektrische Feldstärke steuert, lässt sich somit die Transparenz und damit die Lichttransmission beeinflussen. Die Steuereinrichtung 70 kann zur kontinuierlichen Steuerung und somit zur Dimmung der Lichttransmission dienen. Sie kann auch als Schalteinrichtung 71 ausgebildet sein oder eine solche aufweisen, um zwischen unterschiedlichen Zuständen, beispielsweise den in Fig. 2 und 3 dargestellten Extremzuständen, hin und her zu schalten. Entsprechende Schaltzeiten liegen im Millisekunden-Bereich.

Entsprechende Techniken werden in LCD-Anzeigen zur Ansteuerung kleiner Bildpixel angewandt. Bei der hier vorliegenden Lichttransmissionsbeeinflussungseinrichtung wird eine Zelle 24 zur Beeinflussung der Lichttransmission durch ein Luftfahrzeugfenster 50 angewandt.

In einer anderen Ausführungsform weist die Lichttransmissionsbeeinflussungsvorrichtung 10 eine Schicht aus einem elektrochromen Material 110 auf. Die Lichttransmissionsbeeinflussungsvorrichtung 10 hat eine erste transparente Scheibe 30, eine Lichttransmissionsvariationseinrichtung 11 und eine zweite transparente Scheibe 42. Die Lichttransmissionsvariationseinrichtung 11 weist eine erste Elektrode 32, eine Schicht aus einem elektrochromen Material 110 und eine zweite Elektrode 40 auf. In dieser Ausführungsform ist die Lichttransmissionsvariationseinrichtung komplett zwischen der ersten transparenten Scheibe 30 und der zweiten transparenten Scheibe 42 angeordnet.

Die erste Elektrode 32 und die zweite Elektrode 40 sind über die Schalteinrichtung 71 miteinander verbunden. Beim Schließen der Schalteinrichtung 71 baut sich ein elektrisches Feld zwischen der ersten Elektrode 32 und der zweiten Elektrode 40 auf. Dadurch ändert sich das Reflektionsverhalten und/oder das Absorptionsverhalten der Schicht aus einem elektrochromen Material. Die Lichttransmission durch die Lichttransmissionsbeeinflussungsvorrichtung lässt sich demnach durch die Schalteinrichtung 71 steuern.

Der Abstand der ersten transparenten Scheibe 30 und der zweiten transparenten Scheibe 42 ist d und entspricht der Summe der Dicken der ersten Elektrode 32, der Schicht aus einem elektrochromen Material 110 und der zweiten Elektrode 40. Auch hier sind die erste transparente Scheibe 30 und die zweite transparente Scheibe 42 parallel zueinander angeordnet.

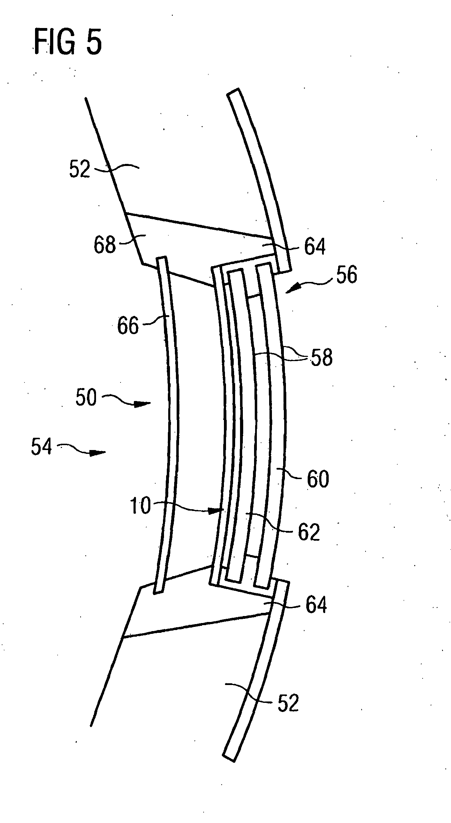

Ein konkretes Ausführungsbeispiel für das Luftfahrzeugfenster 50 wird im Folgenden anhand der Fig. 5 näher dargestellt.

Fig. 5 zeigt einen Querschnitt durch eine Kabinenwand 52 eines Luftfahrzeuges 54, die mit dem Luftfahrzeugfenster 50 versehen ist. Die Kabinenwand 52 ist Teil eines Rumpf des Luftfahrzeugs 54. Das Luftfahrzeugfenster 50 ist mit der Lichttransmissionsbeeinflussungsvorrichtung 10 ausgebildet, um die Lichttransmission durch das Luftfahrzeugfenster 50 zu beeinflussen.

Wie dies grundsätzlich bekannt ist, weist das Luftfahrzeugfenster 50 eine Kabinenfensterscheibenkonstruktion 56 zum äußeren Abschluss an der Kabinenwand 52 auf. Die Kabinenfensterscheibenkonstruktion ist beispielsweise als strukturelle Kabinenverglasung 58 ausgebildet, die den Innenraum der Kabine vor äußeren Einflüssen schützt. Hierzu weist die Kabinenfensterscheibenkonstruktion 56 eine erste Fensterscheibe 60 - z.B. aus Glas -, eine zweite Fensterscheibe 62 - z.B. aus Glas - und einen Einfassungsrahmen 64 auf, der die beiden Fensterscheiben 60, 62 mit Abstand zueinander hält, um so eine isolierende Scheibenkonstruktion zu bilden. Zum Innenraum der Kabine hin weist das Luftfahrzeugfenster 50 eine Abdeckscheibe 56 auf. Das Luftfahrzeugfenster 50 kann als Baueinheit ausgebildet sein, wobei eine innere Fensterlaibung 68 die Abdeckscheibe 66 und die Kabinenfensterscheibenkonstruktion 56 hält.

Bei der in Fig. 5 dargestellten Ausführungsform des Luftfahrzeugfensters 50 ist die Lichttransmissionsbeeinflussungseinrichtung 10 in einem Innenraum zwischen der Abdeckscheibe 66 und der Kabinenfensterscheibenkonstruktion 56, eingefasst in die innere Fensterlaibung 68, ausgebildet.

Die nematische Drehzelle 24 lässt sich dabei durch die in Fig. 5 nicht dargestellte Steuereinrichtung 70 ansteuern, die einen Dimmer 72 aufweist, der durch einen nahe an dem Luftfahrzeugfenster 50 sitzenden Fluggast bedient werden kann, um die Lichttransmission durch das Luftfahrzeugfenster 50 zu dimmen.

Weiter kann ein zentral durch Flugbegleitpersonal betätigbarer, nicht dargestellter Schalter 74 vorgesehen sein, mit dem sich mehrere der Luftfahrzeugfenster 50 ansteuern lassen, um zwischen den in Fig. 2 und 3 dargestellten Zuständen zu schalten.

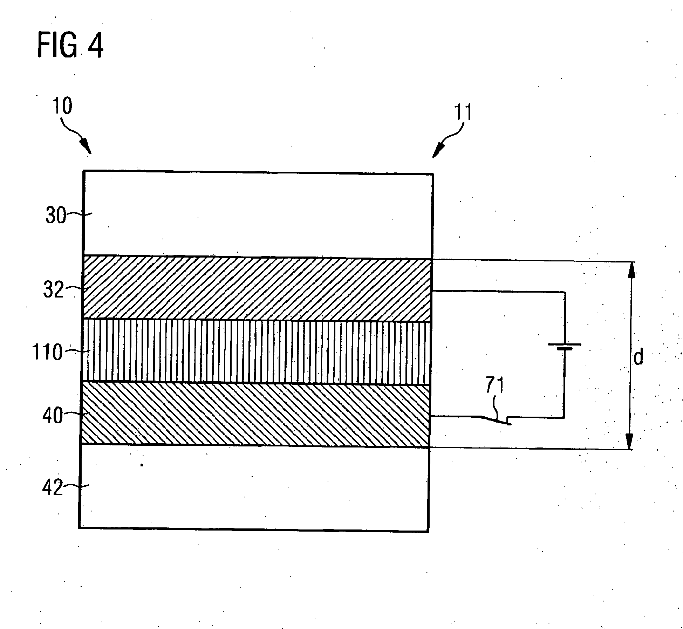

Die Krümmung der Lichttransmissionsbeeinflussungsvorrichtung 10 entspricht im Wesentlichen der Krümmung der ersten Fensterscheibe 60 und der zweiten Fensterscheibe 62. Auch die Abdeckscheibe 66 weist eine Krümmung auf. Die Lichttransmissionsbeeinflussungsvorrichtung 10 ist in unmittelbarer Nachbarschaft zu der zweiten Fensterscheibe 62 angeordnet. Ein Luftspalt wird zwischen der Lichttransmissionsbeeinflussungsvorrichtung 10 und der zweiten Fensterscheibe 62 gebildet. Die Lichttransmissionsbeeinflussungsvorrichtung 10 kann entweder die in Fig. 2 und 3 oder die in Fig. 4 dargestellte sein.

Dadurch, dass die Lichttransmissionsbeeinflussungsvorrichtung 10 und die zweite Fensterscheibe 62 dieselbe Krümmung aufweisen, werden Reflektionen und die Entstehung von Doppelbildern durch einen parallelen Verlauf dieser beiden Einrichtungen reduziert.

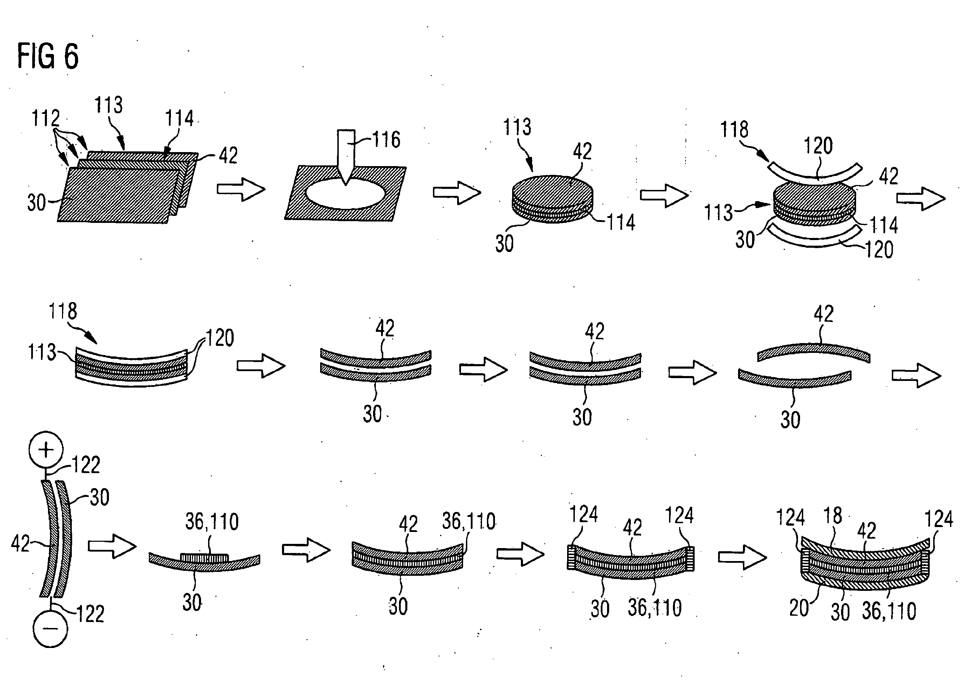

Im Folgenden soll nun anhand der Fig. 6-9 ein Verfahren zur Herstellung einer Lichttransmissionsbeeinflussungsvorrichtung 10 erläutert werden.

Die zu formende erste 30 und zweite transparente Scheibe 42 liegt zunächst als Halbzeug 112, wie beispielsweise als ein großes Stück einer Scheibe vor. Zwischen die erste 30 und die zweite transparente Scheibe 42 wird ein Abstandshalter 114 auch in Form eines Halbzeugs 112 gelegt. Die erste transparente Scheibe 30, der Abstandshalter 114 und die zweite transparente Scheibe 42 werden zur Bildung einer Sandwich-Anordnung 113 übereinander gestapelt und mittels eines Laserstrahls 116 auf die spätere Form hin zugeschnitten. Die ausgeschnittene erste transparente Scheibe 30, der Abstandshalter 114 und die zweite transparente Scheibe 42 werden dann in eine Biegeformeinrichtung 118 eingebracht. Die Biegeformeinrichtung 118 weist zwei Formkörper 120 auf, wobei ein Formkörper 120 eine konvex gekrümmte Formfläche und der andere Formkörper 120 eine konkav gekrümmte Formfläche hat. Die Krümmungen der konvex und konkav gekrümmten Formflächen entsprechen der späteren Krümmung der Lichttransmissionsbeeinflussungsvorrichtung 10 und damit auch der Krümmung der zweiten Scheibe 62 des Lichttransmissionsbeeinflussungsvorrichtung 10.

Die erste transparente Scheibe 30, der Abstandshalter 114 und die zweite transparente Scheibe 42 werden als Sandwich-Anordnung 113 auf eine Erweichungstemperatur der ersten und der zweiten transparenten Scheibe 42 erwärmt und durch Drücken der beiden Formkörper 120 gegeneinander geformt.

Die Formkörper 120 der Biegeformeinrichtung 118 sind beispielsweise aus Graphit oder Bornitrid hergestellt und die Formflächen der Formkörper 120 sind feingeschliffen.

In einem nächsten Schritt wird der Abstandshalter 114 von der ersten 30 und der zweiten transparenten Scheibe 42 getrennt. Die erste 30 und die zweite transparente Scheibe 42 werden nun gereinigt. Im Anschluss wird die erste Elektrode 32 auf die erste transparente Scheibe 30 und die zweite Elektrode 40 auf die zweite transparente Scheibe 42 aufgebracht. Falls eine Flüssigkristallschicht 36 verwendet wird, wird ferner auf die erste Elektrode 32 die erste Orientierungsschicht 34 und auf die zweite Elektrode 40 die zweite Orientierungsschicht 38 aufgebracht. Anschließend werden die erste Elektrode 32 und die zweite Elektrode 40 mit Kontakten 122 verbunden, mittels derer Spannung in die erste 32 und die zweite Elektrode 40 aufgebracht werden können. Zusätzlich werden Distanzhalter angeordnet, um einen gleichmäßigen Abstand d zwischen der ersten transparenten Scheibe 30 und der zweiten transparenten Scheibe 42 zu ermöglichen.

In einem nächsten Schritt wird entweder die Flüssigkristallschicht 36 oder die Schicht 110 aus einem elektrochromen Material auf die erste transparente Scheibe 30 aufgebracht. Darauf wird dann die zweite transparente Scheibe 42 aufgebracht, wobei die Seite, an der die zweite Elektrode 40 angebracht ist, der Flüssigkristallschicht 36 oder der Schicht aus einem elektrochromen Material 110 zugewandt ist. Anschließend werden die Kanten der ersten 30 und der zweiten transparenten Scheibe 42 versiegelt. Dies geschieht entweder durch Aufbringen einer Versiegelungsschicht 124 oder durch Verschweißen der ersten transparenten Scheibe 30 mit der zweiten transparenten Scheibe 42. Falls eine Schicht 110 aus einem elektrochromen Material verwendet wurde, ist die Lichttransmissionsbeeinflussungsvorrichtung 10 nun fertiggestellt. Wurde jedoch die Flüssigkristallschicht 36 verwendet, wird auf die Außenseite der ersten transparenten Scheibe 30 der erste Polarisationsfilter 18 und auf die Außenseite der zweiten transparenten Scheibe 42 der zweite Polarisationsfilter 20 angebracht. Danach ist auch die Lichttransmissionsbeeinflussungsvorrichtung 10 mit der Flüssigkristallschicht 36 fertiggestellt.

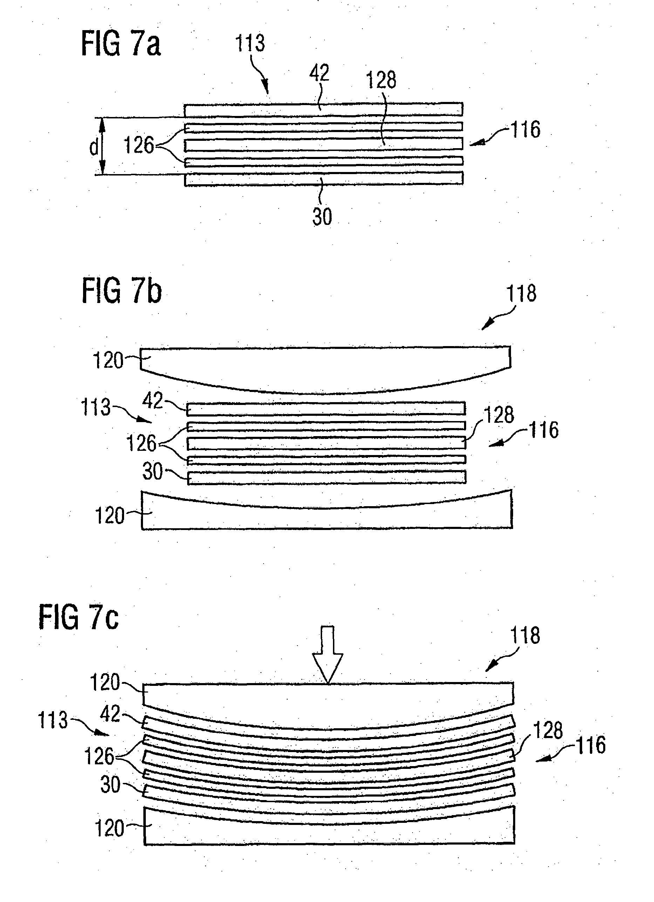

Im Folgenden soll nun anhand der Fig. 7a-c das Krümmen der ersten transparenten Scheibe 30 und der zweiten transparenten Scheibe 42 in dem Fall erläutert werden, wenn die erste 30 und die zweite transparente Scheibe 42 aus Glas gefertigt sind. Der Abstandshalter 114 ist beispielsweise aus zwei Schichten Bornitrid-Pulver 126 und einer Schicht aus einem dünnen Glas 128 aufgebaut. Das Bornitrid-Pulver 126 dient als ein Non-Adhaesivum, um das Aneinanderkleben der ersten transparenten Scheibe 30 und der zweiten transparenten Scheibe 42 mit der dünnen Scheibe 128 zu verhindern. Die dünne Scheibe 128 hat beispielsweise eine Dicke von 0,01 mm und bestimmt im Wesentlichen den Abstand d zwischen der ersten Scheibe 30 und der zweiten transparenten Scheibe 42. Der Abstand d wird durch die dünne Scheibe 128 derart eingestellt, dass dieser im Wesentlichen der Dicke des Teils der Lichttransmissionsvariationseinrichtung 11 entspricht, der später zwischen der ersten 30 und der zweiten transparenten Scheibe 42 angeordnet ist.

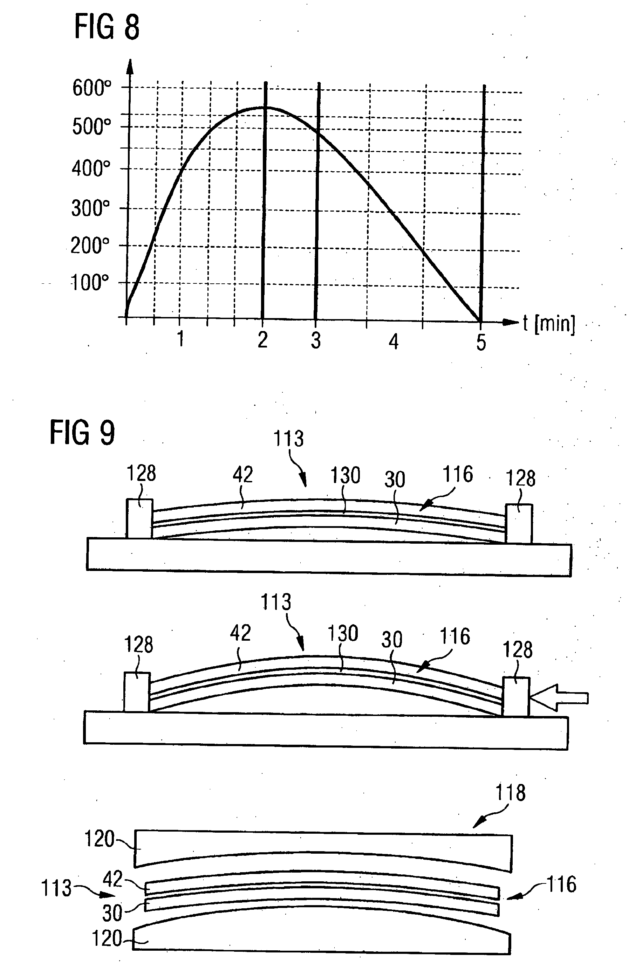

Die Sandwich-Anordnung 113 aus der ersten 30, der zweiten transparenten Scheibe 42 und dem Abstandshalter 114 wird dann in eine Biegeformeinrichtung 118 eingebracht. Die Biegeformeinrichtung 118 und die Sandwich-Anordnung 113 werden dann anhand des in Fig. 8 gezeigten Temperaturverlaufs temperiert. Die erste transparente Scheibe 30 und die zweite transparente Scheibe 42 werden dadurch verformbar und das Gewicht eines Formkörpers 120 drückt die Sandwich-Anordnung 113 auf die Form der Formkörper 120.

In einer Phase 1 wird die Sandwich-Anordnung 113 aktiv erwärmt, bis eine Erweichungstemperatur erreicht ist, die bei ungefähr 510°C liegt und unterhalb der Transformationstemperatur von Glas von 550°C angeordnet ist. Bei Punkt 2 wird das Anwärmen abgeschaltet und bis Punkt 3 wird die Sandwich-Anordnung 113 weder erwärmt noch gekühlt. In Abschnitt 4 wird die Sandwich-Anordnung 113 zusammen mit der Biegeformeinrichtung 118 aktiv gekühlt.

Anhand von Fig. 9 soll nun das Krümmen der ersten 30 und der zweiten transparenten Scheibe 42 erklärt werden, wenn diese aus einem Kunststoff, wie beispielsweise Polymethylmethacrylat (PMMA), hergestellt sind. Die erste transparente Scheibe 30, der Abstandshalter 114 und die zweite transparente Scheibe 42 werden mit Hilfe einer Klammereinrichtung 128 in einer Sandwich-Anordnung 113 fixiert. Der Abstandshalter 114 ist dabei eine Polymethacrylmethylimid-Folie (PMMI-Folie) 130 und hat eine Dicke, die dem Abstand d entspricht. Der Abstand d entspricht dem späteren Abstand der ersten transparenten Scheibe 30 von der zweiten transparenten Scheibe 42, wenn die Lichttransmissionsvariationseinrichtung 11 eingebaut ist.

Die Sandwich-Anordnung 113 wird vor dem eigentlichen Krümmen zunächst vorgekrümmt. Dazu wird eine Belastung quer zu der Krümmrichtung auf die Sandwich-Anordnung 113 aufgebracht. Die Krümmrichtung steht senkrecht zu der ersten und der zweiten transparenten Scheibe 30, 42, wenn diese planar sind. Die Richtung der Belastung wird in Fig. 9 durch den Pfeil angedeutet. Gleichzeitig wird die Sandwich-Anordnung 113 auf eine Wärmeformbeständigkeitstemperatur des Materials der ersten transparenten Scheibe 30 und der zweiten transparenten Scheibe 42 temperiert. Im Falle von PMMA liegt diese bei 115°C. Durch die Belastung krümmt sich die Sandwich-Anordnung 113 um eine unbestimmte Krümmung.

Um die bestimmte Krümmung zu erreichen, wird die Sandwich-Anordnung 113 in die Biegeformeinrichtung 118 eingebracht. Die Formkörper 120 werden ungefähr auf die Wärmeformbeständigkeitstemperatur angewärmt und gegeneinander gepresst. Dadurch erhält die Sandwich-Anordnung 113 die Form der Formflächen der Formkörper 120. Insbesondere erhält die erste transparente Scheibe 30 und die zweite transparente Scheibe 42 die bestimmte Krümmung.

Vorteile der hier zur Ausbildung als Luftfahrzeugfenster 50 vorgeschlagenen Lichttransmissionsbeeinflussungsvorrichtung 10 sind insbesondere:
- Innerhalb der Kabinenverkleidung wird kein Platz für die Vorrichtung 10 benötigt.
- Die Vorrichtung 10 ist z.B. per Dimmer 72 oder per Dimmer-Schalter von dem Fluggast zu bedienen.
- Die Vorrichtung 10 hat ein geringes Gewicht.
- Die Vorrichtung 10 und insbesondere die Polarisationsrichtungsdreheinrichtung 14 lässt sich in Sandwich-Bauweise mit sehr dünnen Substratmaterialien aufbauen. Beispielsweise können für die transparenten Scheiben 30, 42 Dünnglas mit einer Dicke von kleiner als 0,3 mm verwendet werden. Eine Dicke L der Flüssigkristallschicht 36 kann z.B. im Bereich von 10 µm liegen.
- Aufgrund der inneren Anordnung oder aufgrund einer Hybrid-Bauweise besteht keinerlei Bruchgefahr.
- Die Vorrichtung 10 schafft einen hohen Abdunkelungsgrad.
- Eine Verringerung der Transmission des Lichtes lässt sich durch Polarisation und Doppelbrechung des Lichtes in Flüssigkristallen erreichen.
- Die Bildung von unerwünschten Lichtreflektionen oder von Doppelbildern lässt sich reduzieren.

### Bezugszeichenliste:

- 10: Lichttransmissionsbeeinflussungsvorrichtung
- 11: Lichttransmissionsvariationseinrichtung
- 12: Polarisationseinrichtung
- 14: Polarisationsrichtungsdreheinrichtung
- 16: Lichtfiltereinrichtung
- 18: erster Polarisationsfilter
- 20: zweiter Polarisationsfilter
- 22: Polarisationsrichtungsveränderungseinrichtung
- 23: TN-Zelle
- 24: nematische Drehzelle (TN-Zelle)
- 25: nematisches Flüssigkristall
- 26: LCD-System in TN-Technologie
- 28: erster Polarisator
- 30: erste transparente Scheibe (z.B. Glas/PMMA)
- 32: erste Elektrode (ITO-Elektrode)
- 34: erste Orientierungsschicht (Polymer)
- 36: Flüssigkristallschicht
- 38: zweite Orientierungsschicht
- 40: zweite Elektrode (ITO-Elektrode)
- 42: zweite transparente Scheibe (z.B. Glas/PMMA)
- 44: zweiter Polarisator
- 46: Flüssigkristallmoleküle
- 50: Luftfahrzeugfenster
- 52: Kabinenwand
- 54: Luftfahrzeug
- 56: Kabinenfensterscheibenkonstruktion
- 58: strukturelle Kabinenverglasung
- 60: erste Fensterscheibe
- 62: zweite Fensterscheibe
- 64: Einfassungsrahmen
- 66: Abdeckscheibe
- 68: innere Fensterlaibung
- 70: Steuereinrichtung
- 71: Schalteinrichtung
- 72: Dimmer
- 74: Schalter
- 110: Schicht aus elektrochromem Material
- 112: Halbzeug
- 113: Sandwich-Anordnung
- 114: Abstandshalter
- 116: Laserstrahl
- 118: Biegeformeinrichtung
- 120: Formkörper
- 124: Versiegelungsschicht
- 126: Bornitrid-Pulver
- 128: dünne Scheibe
- 130: PMMI-Folie
- 210: Flugzeugfenster
- 211: Außenverglasung
- 212: Innenscheibe
- 214: elektrochrome Vorrichtung
- 216: Körper
- 218: äußere Scheibe
- 220: innere Scheibe
- 222: Trägerscheibe
- 224: elektrochrome Schicht
- 226: Schalter
- d: Abstand
- L: Dicke des Flüssigkristalls (z.B. 10 µm)

## Patentansprüche

1. Verfahren zur Herstellung eines Luftfahrzeugfensters (50) mit einer Lichttransmissionsbeeinflussungsvorrichtung (10) für ein Luftfahrzeugfenster (50), das wenigstens eine mit einer bestimmten Krümmung gekrümmte Fensterscheibe (60, 62) aufweist,
umfassend die Schritte
a0) Vorkrümmen der zu formenden transparenten Scheibe (30) durch Aufbringen einer Belastung quer zu einer Krümmrichtung der zu formenden transparenten Scheibe (30) bei der Erweichungstemperatur,
a) Krümmen einer ersten transparenten Scheibe (30), um sie an die bestimmte Krümmung anzupassen, und
b) Anordnen wenigstens eines Teils einer steuerbaren Lichttransmissionsvariationseinrichtung (11) zur Veränderung der Lichttransmission durch das Luftfahrzeugfenster an der ersten transparenten Scheibe (30).

2. Verfahren nach Anspruch 1, **gekennzeichnet durch** Schritt
c) Krümmen einer zweiten transparenten Scheibe (42), um sie an die bestimmte Krümmung anzupassen,
wobei vorzugsweise Schritt b) umfasst:
b1) Anordnen wenigstens eines Teils der steuerbaren Lichttransmissionsvariationseinrichtung (11) zwischen der ersten transparenten Scheibe (30) und der zweiten transparenten Scheibe (42).

3. Verfahren nach Anspruch 2, **gekennzeichnet durch** gleichzeitiges Durchführen von Schritt a) und c).

4. Verfahren nach Anspruch 3, **gekennzeichnet durch** den vor Schritten a) und c) durchzuführenden Schritt
d) Herstellen einer Sandwich-Anordnung (113), welche die erste transparente Scheibe (30), die zweite transparente Scheibe (42) und einen Abstandshalter (116) aufweist, wobei der Abstandshalter (116) die erste transparente Scheibe (30) von der zweiten transparenten Scheibe (42) um einen Abstand (d) beabstandet, wobei vorzugsweise der Abstand (d) einer Dicke der zwischen der ersten transparenten Scheibe (30) und der zweiten transparenten Scheibe (42) angeordneten Teil der Lichttransmissionsvariationseinrichtung (11) entspricht.

5. Verfahren nach einem der Ansprüche 2 bis 4, **dadurch gekennzeichnet, dass** die Schritte a) und c) ferner umfassen:
a1) Gemeinsames Formen der aufeinandergelegten ersten (30) und zweiten transparenten Scheibe (42) zwischen einer konvex gekrümmten Formfläche und einer konkav gekrümmten Formfläche einer Biegeformeinrichtung (118).

6. Verfahren nach einem der voranstehenden Ansprüche,
**gekennzeichnet durch** Schritt
e) Ausschneiden der zu formenden transparenten Scheibe (30, 42) aus einem Halbzeug (112), vorzugsweise mittels Laserschneidens.

7. Verfahren nach einem der voranstehenden Ansprüche, **dadurch gekennzeichnet, dass** wenigstens einer der Schritte a) und c) ferner umfasst
a2) Temperieren der zu formenden transparenten Scheibe (30, 42) auf eine Erweichungstemperatur, die kleiner als die Schmelztemperatur der transparenten Scheibe (30, 42) ist, und
a3) Krümmen der auf Erweichungstemperatur gebrachten transparenten Scheibe (30, 42).

8. Verfahren nach einem der voranstehenden Ansprüche, **dadurch gekennzeichnet, dass** Schritt b) umfasst:
b2) Anordnen einer Schicht aus einem elektrochromen Material (110) oder
b3) Anordnen
einer Polarisationseinrichtung (12) zum Polarisieren von in das Luftfahrzeugfenster (50) einfallendem Licht, um in eine Polarisationsrichtung polarisierte Lichtstrahlung zu erzeugen,
einer Lichtfiltereinrichtung (16), welche zum Durchlassen von in einer Polarisationsdurchlassrichtung polarisiertem Licht und zum Sperren von in einer Polarisationssperrrichtung polarisiertem Licht ausgebildet ist, und
einer steuerbaren Polarisationsrichtungsdreheinrichtung (14) zum steuerbaren Relativverdrehen der Polarisationsrichtung relativ zu der Lichtfiltereinrichtung (16), um so den Lichtdurchgang zu steuern.

## Claims

1. Method for producing an aircraft window (50) with a light transmission control device (10) for an aircraft window (50) which has at least one window pane (60, 62) that is curved with a defined curvature,
comprising the steps of:
a0) precurving the transparent pane (30) to be shaped, by applying a loading transversely in relation to a direction of curvature of the transparent pane (30) to be shaped that is at the softening temperature,
a) curving a first transparent pane (30) in order to adapt it to the defined curvature and
b) arranging at least part of a controllable light transmission variation device (11) for varying the light transmission through the aircraft window on the first transparent pane (30).

2. Method according to Claim 1, **characterized by** the step of
c) curving a second transparent pane (42), in order to adapt it to the defined curvature,
wherein step b) preferably comprises:
b1) arranging at least part of the controllable light transmission variation device (11) between the first transparent pane (30) and the second transparent pane (42).

3. Method according to Claim 2, **characterized by** carrying out steps a) and c) simultaneously.

4. Method according to Claim 3, **characterized by** the step, to be carried out before steps a) and c), of
d) producing a sandwich arrangement (113), which comprises the first transparent pane (30), the second transparent pane (42) and a spacer (116), wherein the spacer (116) keeps the first transparent pane (30) away from the second transparent pane (42) by a distance (d), wherein the distance (d) preferably corresponds to a thickness of the part of the light transmission variation device (11) that is arranged between the first transparent pane (30) and the second transparent pane (42).

5. Method according to one of Claims 2 to 4, **characterized in that** steps a) and c) also comprise:
a1) jointly shaping the first transparent pane (30) and the second transparent pane (42), placed one on top of the other, between a convexly curved shaping surface and a concavely curved shaping surface of a bending and shaping device (118).

6. Method according to one of the preceding claims, **characterized by** a step of
e) cutting out the transparent pane (30, 42) to be shaped from a semifinished product (112), preferably by means of laser cutting.

7. Method according to one of the preceding claims, **characterized in that** at least one of the steps a) and c) also comprises
a2) adjusting the temperature of the transparent pane (30, 42) to be shaped to a softening temperature that is less than the melting temperature of the transparent pane (30, 42), and
a3) curving the transparent pane (30, 42) that has been brought to the softening temperature.

8. Method according to one of the preceding claims, **characterized in that** step b) comprises
b2) arranging a layer of an electrochromic material (110) or
b3) arranging
a polarization device (12) for polarizing light entering the aircraft window (50), in order to produce light radiation that is polarized in a direction of polarization,
a light filtering device (16), which is designed for allowing through light that is polarized in a polarization passing direction and for blocking light that is polarized in a polarization blocking direction, and
a controllable polarization direction turning device (14) for the controllable relative turning of the polarization direction in relation to the light filtering device (16), in order in this way to control the light transmission.

## Revendications

1. Procédé de fabrication d'un hublot d'aéronef (50) avec un dispositif influençant la transmission de lumière (10) pour un hublot d'aéronef (50), qui présente au moins une vitre de hublot (60, 62) incurvée avec une courbure déterminée, comprenant les étapes suivantes:
a0) pré-cintrage de la vitre transparente à façonner (30) par application d'une charge transversalement à une direction de courbure de la vitre transparente à façonner (30) à la température de ramollissement,
a) courbure d'une première vitre transparente (30), afin de l'adapter à la courbure déterminée,
b) placement d'au moins une partie d'un dispositif réglable de variation de la transmission de la lumière (11) pour faire varier la transmission de la lumière à travers le hublot d'aéronef sur la première vitre transparente (30).

2. Procédé selon la revendication 1, **caractérisé par** l'étape
c) courbure d'une deuxième vitre transparente (42), afin de l'adapter à la courbure déterminée,
dans lequel l'étape b) comprend de préférence l'étape:
b1) placement d'au moins une partie du dispositif réglable de variation de la transmission de la lumière (11) entre la première vitre transparente (30) et la deuxième vitre transparente (42).

3. Procédé selon la revendication 2, **caractérisé par** l'exécution simultanée des étapes a) et c).

4. Procédé selon la revendication 3, **caractérisé par** l'étape à exécuter avant les étapes a) et c):
d) fabrication d'un agencement en sandwich (113), qui présente la première vitre transparente (30), la deuxième vitre transparente (42) et un élément d'écartement (116), dans lequel l'élément d'écartement (116) écarte la première vitre transparente (30) de la deuxième vitre transparente (42) d'une distance (d), dans lequel la distance (d) correspond de préférence à une épaisseur de la partie du dispositif de variation de la transmission de la lumière (11) disposé entre la première vitre transparente (30) et la deuxième vitre transparente (42).

5. Procédé selon l'une quelconque des revendications 2 à 4, **caractérisé en ce que** les étapes a) et c) comprennent en outre l'étape
a1) façonnage commun de la première (30) et de la deuxième (42) vitres transparentes superposées entre une face de façonnage à courbure convexe et une face de façonnage à courbure concave d'un dispositif de façonnage par flexion (118).

6. Procédé selon l'une quelconque des revendications précédentes, **caractérisé par** l'étape
e) découpage de la vitre transparente à façonner (30, 42) hors d'un demi-produit (112), de préférence par découpage au laser.

7. Procédé selon l'une quelconque des revendications précédentes, **caractérisé en ce qu'**au moins une des étapes a) et c) comprend en outre les étapes
a2) équilibrage de la température de la vitre transparente à façonner (30, 42) à une température de ramollissement, qui est inférieure à la température de fusion de la vitre transparente (30, 42), et
a3) courbure de la vitre transparente (30, 42) portée à la température de ramollissement.

8. Procédé selon l'une quelconque des revendications précédentes, **caractérisé en ce que** l'étape b) comprend l'étape
b2) placement d'une couche en un matériau électrochrome (110) ou
b3) placement
d'un dispositif de polarisation (12) pour polariser la lumière atteignant le hublot d'aéronef (50), afin de produire un rayonnement lumineux polarisé dans une direction de polarisation,
d'un dispositif de filtrage de la lumière (16), qui est configuré de façon à laisser passer la lumière polarisée dans une direction de passage de la polarisation et à arrêter la lumière polarisée dans une direction d'arrêt de la polarisation, et
d'un dispositif réglable de rotation de la direction de polarisation (14), pour la rotation relative réglable de la direction de polarisation par rapport au dispositif de filtrage de la lumière (16), afin de régler ainsi le passage de la lumière.
